# EUROPEAN PATENT APPLICATION

(11) **EP 4 568 327 A1**
(43) Date of publication of application: **11.06.2025**
(21) Application number: 23849315.9
(22) Date of filing: 31.07.2023
(51) Int. Cl.: H04W 24/08, H04W 74/08

(54) **SIDELINK LISTEN-BEFORE-TALK DETECTION METHOD, TERMINAL, BASE STATION, AND STORAGE MEDIUM**

(30) Priority: 05.08.2022 CN 202210939208
(71) Applicant: ZTE Corporation, Shenzhen, Guangdong 518057 (CN)
(72) Inventor: HE, Haigang, Shenzhen, Guangdong 518057 (CN); LU, Youxiong, Shenzhen, Guangdong 518057 (CN); MIAO, Ting, Shenzhen, Guangdong 518057 (CN); CHEN, Jie, Shenzhen, Guangdong 518057 (CN)
(74) Representative: Aipex B.V.
(86) International application number: PCT/CN2023/110078
(87) International publication number: WO 2024/027607

(57) **Abstract**

Provided are a sidelink listen-before-talk detection method, a terminal, a base station and a storage medium. The method includes: performing, by a first terminal, a channel access process; performing, by the first terminal, listen-before-talk detection; and reporting, by the first terminal, feedback information related to the listen-before-talk detection. An unlicensed spectrum is supported in a sidelink communication, system resource occupation is reduced, and communication latency is reduced.

## Description

### TECHNICAL FIELD

The present application relates to the field of wireless communication technology and, in particular, to a sidelink listen-before-talk detection method, a terminal, a base station and a storage medium.

### BACKGROUND

In a sidelink (SL) communication system, service transmission between user equipments (UE) may not pass through the network side, that is, the service transmission is not forwarded by the cellular link between the UE and the base station and can be transmitted from the data source UE to the target UE by the SL. Typical applications of SL communication include device-to-device (D2D) communication, vehicle-to-everything (V2E) communication, vehicle-to-pedestrian (V2P) communication and vehicle-to-infrastructure (V2I) communication. For short-distance communication users who can apply SL communication, SL communication not only saves wireless spectrum resources, but also reduces the data transmission pressure of the core network, thereby reducing system resource occupation, improving the spectral efficiency of the cellular communication system, reducing communication latency and reducing network operating costs.

However, existing SL communication only considers the spectrum of the intelligent transport system (ITS) and the licensed spectrum allocated to network operators and does not consider the unlicensed spectrum. In existing SL communication, one slot may include some SL channels, and the SL channels within one slot include a physical sidelink control channel (PSCCH), a physical sidelink shared channel (PSSCH) and a physical sidelink feedback channel (PSFCH). In addition, one slot further includes an orthogonal frequency-division multiplexing (OFDM) symbol, and the entire symbol does not transmit any SL channel.

In SL communication, for the transmission of the unlicensed spectrum, only a channel that succeeds in Listen Before Talk (LBT) is needed. LBT specifically includes that communication nodes compete for an unlicensed spectrum resource. Only when the resource competition is successful can the communication node transmit information on the time-frequency resource. In SL communication, the UE can perform LBT for channel access, and only after the channel is listened to be idle can the channel be occupied. A communication node with successful LBT can occupy the channel for a certain length of time which corresponds to channel occupation time (COT). The time-frequency resource with a certain frequency domain width within the COT is considered to be the resource that the communication node obtains and is allowed to use through the LBT listening mechanism. Conversely, if LBT fails, the communication node cannot transmit information by using the relevant channel on the unlicensed spectrum. In conclusion, current SL communication cannot support the SL communication of the unlicensed spectrum.

### SUMMARY

A main object of embodiments of the present application is to provide a sidelink listen-before-talk detection method, a terminal, a base station and a storage medium to support an unlicensed spectrum in a sidelink communication, reduce system resource occupation and reduce communication latency.

Embodiments of the present application provide a sidelink listen-before-talk detection method. The method includes the following.

A channel access process is performed by a first terminal.

Listen-before-talk detection is performed by the first terminal.

Feedback information related to the listen-before-talk detection is reported by the first terminal.

Embodiments of the present application further provide a sidelink communication access detection method. The method includes the following.

Higher-layer configuration information for listen-before-talk detection is sent to a first terminal by a base station.

The higher-layer configuration information includes at least time domain configuration information.

Embodiments of the present application further provide a terminal. The terminal includes at least one processor and a memory configured to store at least one program.

The at least one program, when executed by the at least one processor, causes the at least one processor to perform any method in the embodiments of the present application.

Embodiments of the present application further provide a base station. The base station includes at least one processor and a memory configured to store at least one program.

The at least one program, when executed by the at least one processor, causes the at least one processor to perform any method in the embodiments of the present application.

Embodiments of the present application further provide a computer-readable storage medium storing at least one program which, when executed by at least one processor, causes the at least one processor to perform any method in the embodiments of the present application.

### BRIEF DESCRIPTION OF DRAWINGS

FIG. 1 is a flowchart of a sidelink listen-before-talk detection method according to an embodiment of the present application.
FIG. 2 is an example diagram of a sidelink listen-before-talk detection method according to an embodiment of the present application.
FIG. 3 is a flowchart of a sidelink listen-before-talk detection method according to an embodiment of the present application.
FIG. 4 is a flowchart of a sidelink listen-before-talk detection method according to an embodiment of the present application.
FIG. 5 is an example diagram of a frequency domain resource corresponding to a resource pool according to an embodiment of the present application.
FIG. 6 is a flowchart of a sidelink listen-before-talk detection method according to an embodiment of the present application.
FIG. 7 is an example diagram of resource reselection according to an embodiment of the present application.
FIG. 8 is a flowchart of another sidelink listen-before-talk detection method according to an embodiment of the present application.
FIG. 9 is a structural diagram of a sidelink listen-before-talk detection apparatus according to an embodiment of the present application.
FIG. 10 is a structural diagram of another sidelink listen-before-talk detection apparatus according to an embodiment of the present application.
FIG. 11 is a structural diagram of a terminal according to an embodiment of the present application.
FIG. 12 is a structural diagram of a base station according to an embodiment of the present application.

### DETAILED DESCRIPTION

It is to be understood that the embodiments described herein are intended to explain the present application, not to limit the present application.

In the subsequent description, a word such as "module", "component", or "unit" for representing an element is used merely to facilitate the description of the present application and has no particular meaning in itself. Therefore, "module", "component", and "unit" may be used in a mixed manner.

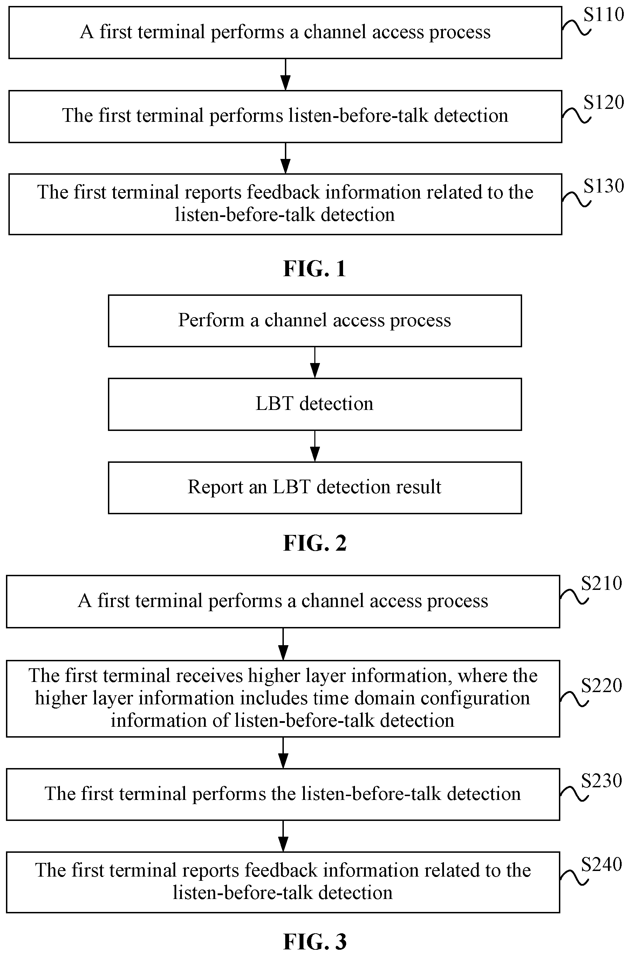

FIG. 1 is a flowchart of a sidelink listen-before-talk detection method according to an embodiment of the present application. The embodiment of the present application may be applicable to the case where a terminal in the sidelink performs listen-before-talk detection on an unlicensed spectrum resource. The method may be performed by a sidelink listen-before-talk detection apparatus. The apparatus may be implemented through software and/or hardware methods and is generally integrated in a terminal device. Referring to FIG. 1, the method provided in the embodiment of the present application specifically includes the steps described below.

In step 110, a channel access process is performed by a first terminal.

In the embodiment of the present application, the first terminal performing sidelink communication can perform the channel access process before accessing the channel and can determine whether the channel is idle through the channel access process.

In step 120, listen-before-talk detection is performed by the first terminal.

The listen-before-talk detection may include listen-before-talk detection performed on an unlicensed spectrum resource by the first terminal and detection performed by the first terminal which determines that the channel idle state fails. The channel idle state failure here may include one channel access failure or multiple consecutive channel access failures.

In the embodiment of the present application, the first terminal can perform listen-before-talk detection on the unlicensed spectrum resource and determine a resource for transmission in the unlicensed spectrum resource through the listen-before-talk detection.

In step 130, feedback information related to the listen-before-talk detection is reported by the first terminal.

The feedback information may be information related to the listen-before-talk detection and may include a detection result of the listen-before-talk detection and information determined by the detection result of the listen-before-talk detection.

In the embodiment of the present application, the first terminal can determine the feedback information related to the listen-before-talk detection and report the feedback information.

In some embodiments, the feedback information includes at least one of a listen-before-talk detection result or target information determined based on a listen-before-talk detection result.

In some embodiments, the listen-before-talk detection result includes a listen-before-talk detection failure, a listen-before-talk detection success, a listen-before-talk consecutive failure, listen-before-talk consecutive failure recovery and listen-before-talk consecutive failure cancellation.

In some embodiments, reporting the listen-before-talk detection result by the first terminal includes: the listen-before-talk detection result is reported to the higher layer of the first terminal by the physical layer of the first terminal, the listen-before-talk detection result is reported to the higher layer of the first terminal by the media access control layer of the first terminal, the listen-before-talk detection result is reported to the base station by the first terminal, and the listen-before-talk detection result is reported to the second terminal by the first terminal.

In some other embodiments, reporting the listen-before-talk detection result of the listen-before-talk detection by the first terminal includes at least one of the following.

Listen-before-talk consecutive failure recovery is reported to a higher layer of the first terminal by a physical layer of the first terminal.

Listen-before-talk consecutive failure recovery is reported to a higher layer of the first terminal by a media access control layer of the first terminal.

Listen-before-talk consecutive failure recovery is reported to a base station by the first terminal.

Listen-before-talk consecutive failure recovery is reported to a second terminal by the first terminal.

Listen-before-talk consecutive failure cancellation is reported to a higher layer of the first terminal by a physical layer of the first terminal.

Listen-before-talk consecutive failure cancellation is reported to a higher layer of the first terminal by a media access control layer of the first terminal.

Listen-before-talk consecutive failure cancellation is reported to a base station by the first terminal.

Listen-before-talk consecutive failure cancellation is reported to a second terminal by the first terminal.

A listen-before-talk failure is reported to a higher layer of the first terminal by a physical layer of the first terminal.

At least one channel where a consecutive listen-before-talk failure occurs is reported to a physical layer of the first terminal by a media access control layer of the first terminal.

In the embodiment of the present application, the listen-before-talk detection result includes a listen-before-talk detection failure, a listen-before-talk detection success, a listen-before-talk consecutive failure, listen-before-talk consecutive failure recovery and listen-before-talk consecutive failure cancellation.

In some embodiments, reporting the listen-before-talk detection result by the first terminal includes: the listen-before-talk detection result is reported to the higher layer of the first terminal by the physical layer of the first terminal, the listen-before-talk detection result is reported to the higher layer of the first terminal by the media access control layer of the first terminal, the listen-before-talk detection result is reported to the base station by the first terminal, and the listen-before-talk detection result is reported to the second terminal by the first terminal.

In an example embodiment, FIG. 2 is an example diagram of a sidelink listen-before-talk detection method according to an embodiment of the present application. Referring to FIG. 2, in the embodiment of the present application, the first terminal performs a listen-before-talk detection operation on an unlicensed spectrum, and specific steps include: 1. a channel access process is performed by a physical layer of a first terminal; 2. LBT detection is performed by the first terminal; 3. a detection result of the LBT detection is reported by the first terminal.

Specifically, the expression that the channel access process is performed by the physical layer of the first terminal means that the channel access process is performed for one or more channels by the first terminal. One channel here refers to a carrier formed by one group of consecutive resource blocks (RB) or a portion of the carrier. The frequency domain resource corresponding to one channel here belongs to a shared spectrum. The channel access process here may also be called the LBT process. The first terminal determines whether the channel is occupied through a channel access process for one or more channels, which may also be expressed as determining whether the channel is idle. If the first terminal determines that the channel is unoccupied (or the channel is idle), it means that the terminal can use the channel for transmission without an LBT failure (an LBT success).

The LBT detection is performed by the first terminal. The LBT detection performed by the first terminal may also be called clear channel assessment (CCA) or clear channel detection. Through the LBT detection, whether an LBT failure has occurred is determined. The LBT failure here may refer to one LBT failure. If the first terminal determines that the channel is occupied (the channel is busy), it means that the terminal cannot use this/these channels for transmission and an LBT failure occurs. The LBT failure here may also refer to the occurrence of multiple consecutive LBT failures.

The expression that the LBT detection result is reported by the first terminal may also be called that the LBT failure result is fed back by the first terminal, the LBT failure result is sent by the first terminal or the LBT failure result is indicated by the first terminal. The LBT failure result here includes at least one of an LBT failure, an LBT success, a consecutive LBT failure, consecutive LBT failure recovery or consecutive LBT failure cancellation.

In the embodiment of the present application, the consecutive LBT failure refers to the occurrence of multiple consecutive LBT failures, and the consecutive LBT failure recovery refers to at least one LBT success detection after consecutive LBT failure detection. Similarly, the consecutive LBT failure cancellation is at least one LBT success detection after the occurrence of the consecutive LBT failure.

In another example embodiment, the detection result of the LBT detection reported by the first terminal includes at least one of the following.

LBT consecutive failure recovery is reported to a higher layer of the first terminal by a physical layer of the first terminal.

LBT consecutive failure recovery is reported to a higher layer of the first terminal by a media access control (MAC) layer of the first terminal.

LBT consecutive failure recovery is reported to a base station by the first terminal.

LBT consecutive failure recovery is reported to a second terminal by the first terminal.

LBT consecutive failure cancellation is reported to a higher layer of the first terminal by a physical layer of the first terminal.

LBT consecutive failure cancellation is reported to a higher layer of the first terminal by a MAC layer of the first terminal.

LBT consecutive failure cancellation is reported to a base station by the first terminal.

LBT consecutive failure cancellation is reported to a second terminal by the first terminal.

Specifically, the expression that the LBT failure recovery is reported by the first terminal may also be described as an expression that the LBT failure recovery is fed back by the first terminal, an expression that the LBT failure recovery is indicated by the first terminal or an expression that the LBT failure recovery is sent by the first terminal.

The expression that the LBT failure cancellation is reported by the first terminal may also be described as an expression that the LBT failure cancellation is fed back by the first terminal, an expression that the LBT failure cancellation is indicated by the first terminal or an expression that the LBT failure cancellation is sent by the first terminal.

The expression that the LBT failure recovery (or the LBT consecutive failure cancellation) is reported by the first terminal means that although the consecutive LBT failure has occurred before, no consecutive LBT failure occurs currently.

The LBT consecutive failure recovery (or the LBT consecutive failure cancellation) is reported to the higher layer of the first terminal by the physical layer of the first terminal. The higher layer here may be a media access control (MAC) layer or a radio resource control (RRC) layer.

The LBT consecutive failure recovery (or the LBT consecutive failure cancellation) is reported to the higher layer of the first terminal by the MAC layer of the first terminal. The higher layer here may be the RRC layer.

In the embodiment of the present application, reporting the LBT consecutive failure recovery to the base station by the first terminal is used as an example. A terminal reports only the consecutive LBT failure to the base station and does not report the LBT failure recovery. In the related art, even if the terminal does not report LBT failure recovery to the base station, the base station can determine whether the LBT failure is recovered. This is because the terminal is scheduled by the base station, and the base station can know the time-frequency resources of the terminal. The base station can receive the information sent by the terminal on these known time-frequency resources. If the base station can receive the information sent by the terminal, the base station can infer that the LBT of the terminal is successful. The reason is that under the condition that LBT is performed by the terminal, only when the LBT is successful can the terminal send information on the time-frequency resources scheduled by the base station. However, SL resource allocation includes two resource allocation modes: resource allocation scheduled by the base station and resources autonomously selected by the UE. In the mode where the resources are autonomously selected by the UE, the base station does not know the resources selected by the UE. Therefore, the base station cannot determine whether the UE has recovered the LBT failure by receiving the information sent by the UE. Even no matter through the resource allocation scheduled by the base station or the resources autonomously selected by the UE, the base station cannot determine whether the UE has recovered the LBT failure by receiving the information sent by the UE. This is because in SL communication, the base station does not generally receive the SL information sent by the UE. In the present application, the LBT failure recovery is reported to the base station by the terminal so that the base station can be assisted in knowing whether the LBT failure on the UE side is recovered, thereby facilitating the base station to perform some operations. For example, the base station knows that after the LBT failure (or the consecutive LBT failure) recovery of one carrier (or one resource pool) on the UE side, the base station can send some control information to the UE. Through the control information, the UE continues to use the carrier (or the resource pool) where the consecutive LBT failure occurred before to transmit SL information. Therefore, the range of the carrier (or the resource pool) used by the UE can be increased, and the throughput and data transmission efficiency of the SL communication can be increased.

The method for determining a consecutive LBT failure is as follows: before a minus-1 counter decrements to 0, if the number of LBT failures during this period reaches the threshold value, the consecutive LBT failure is determined. Otherwise, it is determined that no consecutive LBT failure has occurred. Before the minus-1 counter decrements to 0, if LBT is monitored to be successful, a value greater than 0 is reinitialized on the minus-1 counter.

The above LBT detection before the minus-1 counter decrements to 0 is performed only when the communication node sends data. In V2X, in mode2 resource allocation, relatively discrete allocated resources lead to a problem: since the mode2 resource allocation is discrete and only a small amount of resource allocation falls within time [t, t2], even if the LBT failure occurs in all the resources selected by the UE falling within time [t, t2], the threshold value of the number of LBT failures cannot be reached, and the LBT consecutive failure cannot be determined. The real situation is that the channel corresponding to the LBT detection performed by the target UE is already very busy, almost all the resources are occupied by other communication nodes and the LBT failure occurs in the target UE almost every time. For the above situation, a reasonable method is that the LBT consecutive failure should be determined for the UE. Consecutive LBT failure determination means that the UE can switch to an idle shared channel for resource competition and communication.

FIG. 3 is a flowchart of a sidelink listen-before-talk detection method according to an embodiment of the present application. The embodiment of the present application is an embodiment based on the preceding embodiment of the present application. Referring to FIG. 3, the method provided in the embodiment of the present application specifically includes the steps described below.

In step 210, a channel access process is performed by a first terminal.

In step 220, higher layer information is received by the first terminal, where the higher layer information includes time domain configuration information of listen-before-talk detection.

In the embodiment of the present application, the first terminal can configure the listen-before-talk detection according to the higher layer information and can specifically configure the time domain information of the listen-before-talk detection. It may be understood that the steps are only for distinction and are not limited. In some embodiments, step 220 may be performed before step 210.

In step 230, the listen-before-talk detection is performed by the first terminal.

In step 240, feedback information related to the listen-before-talk detection is reported by the first terminal.

In some embodiments, the time domain configuration information of the listen-before-talk detection includes at least one of bitmap configuration information at a time domain position of the listen-before-talk detection, a time domain period of the listen-before-talk detection, duration of the listen-before-talk detection within the time domain period, duration of the listen-before-talk detection, or duration and a proportion or a minimum proportion of the listen-before-talk detection within the duration.

Specifically, the higher layer information may be configured for the time domain position of the listen-before-talk detection of the first terminal. The higher layer information may include the bitmap configuration information of the listen-before-talk detection or the time domain period of the listen-before-talk detection. The higher layer information may further include the duration of the listen-before-talk detection within the time domain period, the duration of the listen-before-talk detection, or the duration and the proportion or the minimum proportion of the listen-before-talk detection within the duration.

In an example embodiment, the method may further include receiving the higher layer information by the first terminal. The higher layer information includes the time domain configuration information of the LBT detection, and the time domain configuration information of the LBT detection includes at least one of bitmap configuration information at a time domain position of the LBT detection, a time domain period of the LBT detection, a time domain period of the LBT detection and duration of the LBT detection within the period, duration of the listen-before-talk detection, or duration and a proportion or a minimum proportion of the listen-before-talk detection within the duration.

The higher layer information here is, for example, RRC information. The above higher layer information is the higher layer information of the first terminal, and information from the higher layer of the first terminal is received by the physical layer of the first terminal. Alternatively, the higher layer information is higher layer information sent by the base station.

In addition to the above time domain configuration information of the LBT detection, the higher layer information may further include a frequency domain granularity of the LBT detection. The frequency domain granularity of the LBT detection may include at least one of the following.

The frequency domain granularity of the LBT detection is one carrier.

The frequency domain granularity of the LBT detection is one resource pool in one carrier.

The frequency domain granularity of the LBT detection is one frequency domain resource subset in one resource pool in one carrier, where the frequency domain resource subset includes at least one channel in the one resource pool.

In the bitmap configuration information at the time domain position of the LBT detection, for example, if bitmap is [1 0 1 0 1 1 0 1], it means that LBT detection is performed on the 1st, 3rd, 5th, 6th and 8th slots among the eight slots. The time domain position of the LBT detection can be periodically indicated based on bitmap configuration. For example, if the bitmap configuration is [1 0 1 0 1 1 0 1], the slot for LBT detection can be determined as {1, 3, 5, 6, 8} in the slot set {1, 2, 3, 4, 5, 6, 7, 8}, the slot for LBT detection can be determined as {9, 11, 13, 14, 16} in the slot set {9, 10, 11, 12, 13, 14, 15, 16}, and so on.

When the time domain configuration information of the LBT detection includes the time domain period of the LBT detection and the duration D of the LBT detection within the period, the first terminal can perform LBT detection for D consecutive time units (for example, D slots) within each period. The start position of the period and the initial position of the D time units within the period may be predetermined fixed values or values configured by higher-layer signaling. Based on the above manner that the higher layer information indicates the time domain configuration information of the LBT detection, even if there is no data transmission, the terminal performs the LBT detection process and performs the LBT detection.

In SL communication, discrete resources are allocated according to the mode2 manner. In related art, even if the LBT consecutive failure occurs, the consecutive LBT failure cannot be generally determined. The method for determining an LBT consecutive failure is as follows: before a minus-1 counter decrements to 0, if the number of LBT failures during this period reaches the threshold value, the consecutive LBT failure is determined. Otherwise, it is determined that no consecutive LBT failure has occurred. Before the minus-1 counter decrements to 0, if LBT is monitored to be successful, a value greater than 0 is reinitialized on the minus-1 counter.

The above LBT detection before the minus-1 counter decrements to 0 is performed only when the communication node sends data. In SL communication, in the resource allocation process according to mode2, relatively discrete allocated resources lead to a problem: during the period [t, t2] before the minus-1 counter decrements to 0, since the mode2 resource allocation is discrete and only a small amount of resource allocation falls within time [t, t2], even if the LBT failure occurs in all the resources selected by the UE falling within time [t, t2], the threshold value of the number of LBT failures cannot be reached, and the LBT consecutive failure cannot be determined. The real situation is that the channel corresponding to the LBT detection performed by the target UE is already very busy, almost all the resources are occupied by other communication nodes and the LBT failure occurs in the target UE almost every time. For the above situation, a reasonable method is that the LBT consecutive failure should be determined for the UE. Consecutive LBT failure determination means that the UE can switch to an idle shared channel for resource competition and communication.

The above problem can be solved in a manner of configuring the time domain position of LBT failure measurement. Configuring the time domain position of the LBT measurement (for example, the LBT measurement opportunity) differs from the related art in that the communication node can also perform LBT measurement at a time when there is no data transmission and/or no resource is allocated/selected. Therefore, the resource allocation position in the SL communication according to mode2 and the time domain position of the LBT failure measurement are independent and have no dependency. Therefore, the allocation characteristics of the discrete resources in the SL communication according to mode2 do not cause the above-mentioned phenomenon that the determination result of the LBT consecutive failure is unreasonable.

In some embodiments, reporting the listen-before-talk detection result of the listen-before-talk detection by the first terminal includes the following.

The listen-before-talk detection is performed by a physical layer of the first terminal. Listen-before-talk failure detection is counted by the physical layer of the first terminal. When the count is zero or reaches a threshold value, a consecutive listen-before-talk failure is reported to a media access control layer of the first terminal by the physical layer of the first terminal.

Specifically, the LBT detection is performed by the physical layer of the first terminal, and after the LBT consecutive failure is detected based on the above process by the physical layer of the first terminal, the LBT failure is reported to the MAC layer of the first terminal by the physical layer of the first terminal.

In some embodiments, the listen-before-talk detection is consecutive listen-before-talk detection, and correspondingly, performing the listen-before-talk detection by the first terminal includes at least one of the following.

The consecutive listen-before-talk detection is performed on one carrier by the first terminal.

The consecutive listen-before-talk detection is performed on one resource pool by the first terminal.

The consecutive listen-before-talk detection is performed on one frequency domain resource subset in one resource pool, where the frequency domain resource subset includes at least one channel in the one resource pool.

Further, based on the preceding embodiment of the present application, the frequency domain resource subset is indicated by higher-layer signaling.

Specifically, the expression that the consecutive LBT detection is performed on one carrier means that the granularity of the consecutive LBT detection is one carrier. One carrier may include multiple channel access processes, and each channel access process performs a channel access process on at least one channel in the carrier. For example, one carrier includes three channels, a first channel access process performs a channel access process on a first channel, and whether the first channel is available (that is, whether the channel is occupied or whether the channel is idle) is evaluated. A second channel access process performs a multi-channel access process on a second channel and a third channel, and whether the second channel and the third channel are available is evaluated. The LBT failure may occur in the first channel access process or the second channel access process. LBT failures in all the LBT processes within one carrier range are counted by the first terminal to determine whether the LBT consecutive failure occurs. The method for determining an LBT consecutive failure is as follows: before a minus-1 counter decrements to 0, if the sum of the number of LBT failures corresponding to all the LBT processes during this period reaches the threshold value, the consecutive LBT failure is determined. Otherwise, it is determined that no consecutive LBT failure has occurred. Before the minus-1 counter decrements to 0, if LBT is monitored to be successful in any one of the LBT processes, a value greater than 0 is reinitialized on the minus-1 counter. In the above manner, whether the consecutive LBT failure has occurred in one carrier is determined by the first terminal.

The frequency domain resource corresponding to one resource pool belongs to one carrier, and the one resource pool includes at least one channel. The expression that the consecutive LBT detection is performed on one resource pool means that the granularity of the consecutive LBT detection is one resource pool (the frequency domain resource corresponding to the resource pool). One resource pool may include multiple channel access processes, and each channel access process performs the channel access process on at least one channel in the resource. For example, one resource pool includes three channels, a first channel access process performs a channel access process on a first channel, and whether the first channel is available (that is, whether the channel is occupied or whether the channel is idle) is evaluated. A second channel access process performs a multi-channel access process on a second channel and a third channel, and whether the second channel and the third channel are available is evaluated. The LBT failure may occur in the first channel access process or the second channel access process. LBT failures in all the LBT processes within one resource pool range are counted by the first terminal to determine whether the LBT consecutive failure occurs. The method for determining an LBT consecutive failure is as follows: before a minus-1 counter decrements to 0, if the sum of the number of LBT failures corresponding to all the LBT processes during this period reaches the threshold value, the consecutive LBT failure is determined. Otherwise, it is determined that no consecutive LBT failure has occurred. Before the minus-1 counter decrements to 0, if LBT is monitored to be successful in any one of the LBT processes, a value greater than 0 is reinitialized on the minus-1 counter. In the above manner, whether the consecutive LBT failure has occurred in one resource pool is determined by the first terminal.

The principle of performing the consecutive LBT detection on one frequency domain resource subset in one resource pool is the same as above and is not described here.

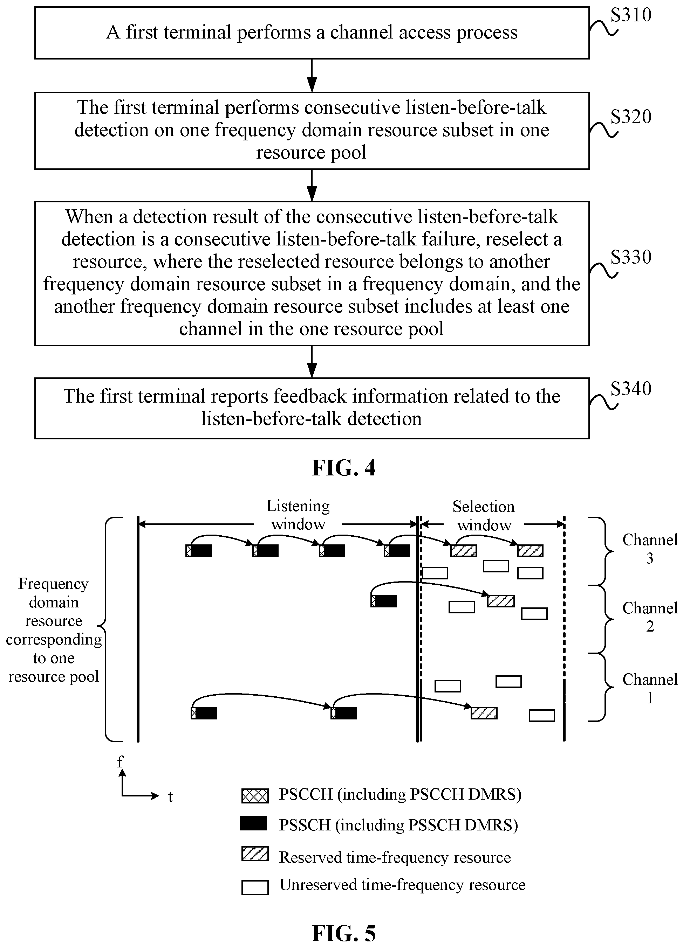

FIG. 4 is a flowchart of another sidelink listen-before-talk detection method according to an embodiment of the present application. The embodiment of the present application is an embodiment based on the preceding embodiment of the present application. Referring to FIG. 4, the method provided in the embodiment of the present application specifically includes steps described below.

In step 310, a channel access process is performed by a first terminal.

In step 320, consecutive listen-before-talk detection is performed on one frequency domain resource subset in one resource pool by the first terminal.

In step 330, when a detection result of the consecutive listen-before-talk detection is a consecutive listen-before-talk failure, a resource is reselected, where the reselected resource belongs to another frequency domain resource subset in a frequency domain, and the another frequency domain resource subset includes at least one channel in the one resource pool.

In the embodiment of the present application, the consecutive listen-before-talk detection is performed on the one frequency domain resource subset in the one resource pool by the first terminal, and when it is determined that the detection result of the consecutive listen-before-talk detection is the consecutive listen-before-talk failure, the resource is reselected, where the reselected resource belongs to the another frequency domain resource subset in the one resource pool, and the frequency domain resource subset includes the at least one channel.

In step 340, feedback information related to the listen-before-talk detection is reported by the first terminal. It may be understood that the steps are only for distinction and are not limited. In some embodiments, step 340 may be performed before step 330. In some other embodiments, step 340 may also be performed after step 330.

Further, based on the preceding embodiment of the present application, the detection result of performing consecutive listen-before-talk detection on another frequency domain resource subset is that no consecutive listen-before-talk failure occurs.

Specifically, the resource reselected by the first terminal may belong to another frequency domain resource subset in the resource pool that has been subjected to the consecutive listen-before-talk detection. No consecutive listen-before-talk failure occurs in the frequency domain resource subset. It may be understood that one frequency domain resource set before the resource reselection and another frequency domain resource set after the resource reselection belong to the same resource pool or different resource pools and the one frequency domain resource set before the resource reselection does not overlap with the another frequency domain resource set after the resource reselection.

In an example embodiment, one resource pool includes multiple time-frequency resources, multiple frequency domain resources on the frequency domain, and multiple time domain units one the time domain. For example, each time domain unit is one slot. The time-frequency resource included in one resource pool is a time-frequency resource that can be used for SL communication (or a time-frequency resource that can be used for PSSCH transmission). The frequency domain resource corresponding to one resource pool includes at least one channel. One channel here refers to a carrier formed by one group of consecutive resource blocks (RB) or a portion of the carrier. The frequency domain resource corresponding to one channel here belongs to a shared spectrum. In FIG. 5, the frequency domain resource corresponding to one resource pool include three channels.

One terminal receives sidelink control information (SCI) within the time domain listening window. As shown in FIG. 5, the SCI sent by another terminal is received by the first terminal, and the SCI sent by another terminal is sent by the PSSCH. Another terminal sends PSCCH at the same time in the slot where a PSCCH is sent. Another terminal sends PSCCH at the same time in the time-frequency region where a demodulation reference signal (DMRS) is sent. Similarly, another terminal sends PSSCH at the same time in the time-frequency region where a PSSCH DMRS is sent. The SCI sent by another terminal includes an indication of the time-frequency resource reserved by the terminal.

The first terminal determines the time-frequency resource reserved by another terminal by receiving the SCI. The first terminal selects (excludes) a resource within the time domain resource selection window based on the reception of SCI. The time domain resource selection window here is one time interval or a slot set within one time interval. As shown in FIG. 5, the time domain resource selection window includes multiple resources. Some resources overlap with a time-frequency resource reserved by another terminal, and some resources do not overlap with the time-frequency resource reserved by another terminal. Through the measurement of reference signal receiving power (RSRP), the first terminal excludes a resource with RSRP higher than the threshold in the resource selection window, and the remaining resources are marked as a resource set A or the resource subset of the remaining resources is marked as a set A. For one resource in the resource selection window, if the resource overlaps with the time-frequency resource reserved by another terminal, the first terminal determines the RSRP of the resource within the resource selection window through the measurement of the PSCCH DMRS or PSSCH DMRS in the slot where the SCI of the reserved resource is located.

In an example embodiment, in an embodiment, performing LBT detection by the first terminal includes at least one of the following.

One carrier includes at least two resource pools, and an LBT consecutive failure triggers the reselection of the resource pools.

One carrier includes multiple resource pools, and the multiple resource pools include at least two transmission resource pools configured for the first terminal. An LBT consecutive failure triggers the reselection of the resource pools, and the reselected resource pools belong to the resource pools configured for the transmission of the first terminal.

One carrier includes at least one resource pool, and an LBT consecutive failure triggers the reselection of the carrier.

Specifically, the expression that one carrier includes at least two resource pools and an LBT consecutive failure triggers the reselection of the resource pools means that if the first terminal determines that a consecutive LTB failure has occurred in one resource pool of one carrier, the first terminal reselects a resource pool where no consecutive LBT failure occurs. Alternatively, if the first terminal determines that a consecutive LBT failure has occurred in some channels of one resource pool of one carrier, the first terminal reselects a resource pool that does not include a consecutive LBT failure. After the reselection of the resource pool, in the newly selected resource pool, the first terminal performs the resource selection process (which may also be called a resource exclusion process) in one resource pool described above.

The expression that one carrier includes at least one resource pool and an LBT consecutive failure triggers the reselection of the carrier means that if the first terminal determines that a consecutive LTB failure has occurred in one carrier, the first terminal reselects a carrier where no consecutive LBT failure occurs. The first terminal selects a resource pool in the newly selected carrier, and in the resource pool of the newly selected carrier, the first terminal performs the resource selection process (which may also be called a resource exclusion process) in one resource pool described above.

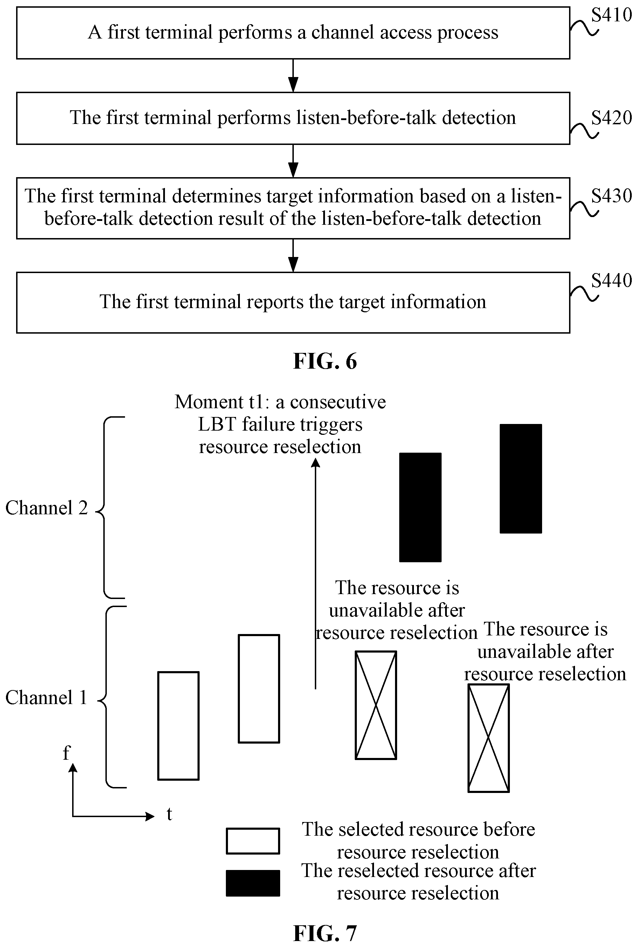

FIG. 6 is a flowchart of a sidelink listen-before-talk detection method according to an embodiment of the present application. The embodiment of the present application is an embodiment based on the preceding embodiment of the present application. Referring to FIG. 6, the method provided in the embodiment of the present application specifically includes steps described below.

In step 410, a channel access process is performed by a first terminal.

In step 420, listen-before-talk detection is performed by the first terminal.

In step 430, target information is determined by the first terminal based on a listen-before-talk detection result of the listen-before-talk detection.

In the embodiment of the present application, the target information can be determined by the first terminal according to the listen-before-talk detection result of the failure detection and may be information related to the listen-before-talk detection result, for example, a time-frequency resource in a resource pool that does not overlap with a channel where a consecutive listen-before-talk failure occurs and a channel where a consecutive LBT failure occurs.

In step 440, the target information is reported by the first terminal.

In the embodiment of the present application, the target information can be reported by the first terminal.

In an example embodiment, the method provided in the embodiment of the present application can trigger resource reselection when the detection result is a consecutive listen-before-talk failure. Referring to FIG. 7, that LBT detection is performed by the first terminal, the detection result is a consecutive LBT failure and resource reselection is triggered includes at least one of the following.

If the detection result is a consecutive LBT failure, the resource before reselection and the resource after reselection belong to the same resource pool.

If the detection result is a consecutive LBT failure, the reselected resource belongs to a frequency domain resource set in the frequency domain. The frequency domain resource set includes N channels, and each of the N channels is a channel where no consecutive LBT failure occurs, where a resource pool subjected to LBT detection includes at least two LBT channels.

If the detection result is a consecutive LBT failure, the reselected resource belongs to a frequency domain resource set in the frequency domain. The frequency domain resource set includes N consecutive channels, and each of the N consecutive channels is a channel where no consecutive LBT failure occurs, where a resource pool subjected to LBT detection includes at least three LBT channels.

The N consecutive channels mean that the channel numbers are consecutive. The same channel includes consecutive RBs, and several RBs may exist between two adjacent channels.

In FIG. 7, a channel 1 and a channel 2 belong to the same resource pool. Before a moment t1, the time-frequency resources selected by the first terminal are shown in FIG. 7. The time-frequency resources selected by the first terminal before the moment t1 all belong to the first channel in the frequency domain. At the moment t1 or a moment before and adjacent to the moment t1, the first terminal finds a consecutive LBT failure, and the consecutive LBT failure triggers resource reselection. The reselected resources belong to a channel where no consecutive LBT failure occurs in the frequency domain. After the moment t1, the first terminal uses the reselected time-frequency resources for SL transmission. After the moment t1, the first terminal no longer uses the time-frequency resources selected before resource reselection for SL transmission.

In some embodiments, the target information includes a second time-frequency resource set, and the second time-frequency resource set includes a time-frequency resource in a resource pool that does not overlap with a channel where a consecutive listen-before-talk failure occurs.

In some other embodiments, the listen-before-talk detection result includes at least a consecutive listen-before-talk failure.

In some embodiments, reporting the target information by the first terminal includes the following.

At least one time-frequency resource in a first time-frequency resource set is excluded by a physical layer of the first terminal, and a set corresponding to remaining time-frequency resources is marked as a second time-frequency resource set, where the first time-frequency resource set includes a time-frequency resource included in a channel where no consecutive listen-before-talk failure occurs included in one resource pool within one time interval.

In some other embodiments, reporting the target information by the first terminal includes the following.

The target information is reported to a higher layer by the physical layer of the first terminal, where the target information includes the second time-frequency resource set.

In the embodiment of the present application, the target information including the second time-frequency resource set can be reported to the higher layer by the physical layer of the first terminal, where the second time-frequency resource set is the set corresponding to the remaining time-frequency resources after the at least one time-frequency resource in the first time-frequency resource set is excluded by the physical layer of the first terminal, and the first time-frequency resource set includes at least one time-frequency resource included in the one resource pool within the one time interval.

In some embodiments, the method provided in the embodiment of the present application further includes the following.

A listen-before-talk failure indication reported by a physical layer of the first terminal is received by a higher layer of the first terminal, where the listen-before-talk failure indication includes a channel where a consecutive listen-before-talk failure occurs.

At least one time-frequency resource in a first time-frequency resource set is excluded by the physical layer of the first terminal, and a set corresponding to remaining time-frequency resources is marked as a second time-frequency resource set, where the first time-frequency resource set includes at least one time-frequency resource included in one resource pool within one time interval.

The second time-frequency resource set is reported to the higher layer of the first terminal by the physical layer of the first terminal.

The second time-frequency resource set reported by the physical layer of the first terminal is received by the higher layer of the first terminal.

At least one time-frequency resource is selected in the second time-frequency resource set by the higher layer of the first terminal, where the at least one time-frequency resource does not overlap with a channel where a consecutive listen-before-talk failure occurs in a resource pool where the at least one time-frequency resource is located.

In the embodiment of the present application, the higher layer includes the MAC layer of the first terminal, the at least one time-frequency resource in the first time-frequency resource set is excluded by the physical layer of the first terminal, and the set corresponding to the remaining time-frequency resources is marked as the second time-frequency resource set. The time-frequency resources here may be the remaining time-frequency resources in the first time-frequency resource set after only the resource exclusion or at least one time-frequency resource in one subset of the time-frequency resources in the first time-frequency resource set after the resource exclusion. The at least one time-frequency resource is used as the remaining time-frequency resource.

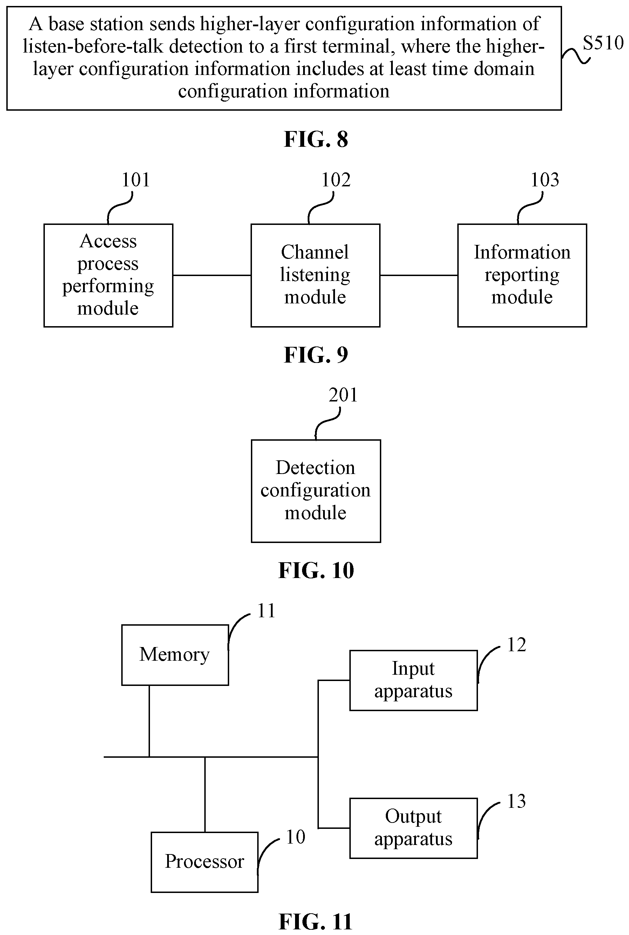

FIG. 8 is a flowchart of another sidelink listen-before-talk detection method according to an embodiment of the present application. Referring to FIG. 8, the embodiment of the present application may be applicable to the case where a terminal in the sidelink performs listen-before-talk detection on an unlicensed spectrum resource. The method may be performed by a sidelink listen-before-talk detection apparatus. The apparatus may be implemented through software and/or hardware methods and is generally integrated in a base station. The method provided in the embodiment of the present application specifically includes the steps described below.

In step 510, higher-layer configuration information of listen-before-talk detection is sent to a first terminal by a base station, where the higher-layer configuration information includes at least time domain configuration information.

In some embodiments, the time domain configuration information includes at least one of bitmap configuration information at a time domain position of the listen-before-talk detection, a time domain period of the listen-before-talk detection, duration of the listen-before-talk detection within the time domain period, duration of the listen-before-talk detection, or duration and a proportion or a minimum proportion of the listen-before-talk detection within the duration.

FIG. 9 is a structural diagram of a sidelink listen-before-talk detection apparatus according to an embodiment of the present application. The apparatus can perform the sidelink listen-before-talk detection method of any embodiment of the present application and has function modules and beneficial effects corresponding to the performed method. The apparatus may be implemented by software and/or hardware. As shown in FIG. 9, the apparatus provided in the embodiment of the present application specifically includes an access process performing module 101, a channel listening module 102 and an information reporting module 103.

The access process performing module 101 is configured to perform a channel access process.

The channel listening module 102 is configured to perform listen-before-talk detection.

The information reporting module 103 is configured to report feedback information related to the listen-before-talk detection.

In an embodiment, the feedback information includes at least one of a listen-before-talk detection result or target information determined based on the listen-before-talk detection result.

In another embodiment, the information reporting module 103 is specifically configured for at least one of the following.

Listen-before-talk consecutive failure recovery is reported to a higher layer of the first terminal by a physical layer of the first terminal.

Listen-before-talk consecutive failure recovery is reported to a higher layer of the first terminal by a media access control layer of the first terminal.

Listen-before-talk consecutive failure recovery is reported to a base station by the first terminal.

Listen-before-talk consecutive failure recovery is reported to a second terminal by the first terminal.

Listen-before-talk consecutive failure cancellation is reported to a higher layer of the first terminal by a physical layer of the first terminal.

Listen-before-talk consecutive failure cancellation is reported to a higher layer of the first terminal by a media access control layer of the first terminal.

Listen-before-talk consecutive failure cancellation is reported to a base station by the first terminal.

Listen-before-talk consecutive failure cancellation is reported to a second terminal by the first terminal.

A listen-before-talk failure is reported to a higher layer of the first terminal by a physical layer of the first terminal.

At least one channel where a consecutive listen-before-talk failure occurs is reported to a physical layer of the first terminal by a media access control layer of the first terminal.

In another embodiment, the apparatus further includes a configuration receiving module configured for the first terminal to receive higher layer information, where the higher layer information includes time domain configuration information of the listen-before-talk detection, and the time domain configuration information of the listen-before-talk detection includes at least one of bitmap configuration information at a time domain position of the listen-before-talk detection, a time domain period of the listen-before-talk detection, duration of the listen-before-talk detection within the time domain period, duration of the listen-before-talk detection, or duration and a proportion or a minimum proportion of the listen-before-talk detection within the duration.

In an embodiment, the information reporting module 103 is configured for the following.

The listen-before-talk detection is performed by a physical layer of the first terminal.

The number of times that the listen-before-talk detection result is a listen-before-talk failure is counted by the physical layer of the first terminal.

When the count is zero or reaches a threshold value, a consecutive listen-before-talk failure is reported to a media access control layer of the first terminal by the physical layer of the first terminal.

In an embodiment, the apparatus further includes a resource reselection module configured for at least one of the following.

When the first terminal detects a listen-before-talk consecutive failure for one carrier, resource pools are reselected, where each carrier includes at least two of the resource pools.

When the first terminal detects a listen-before-talk consecutive failure for one carrier, the carrier is reselected, where the reselected carrier is different from the carrier, and each carrier includes at least one resource pool.

In an embodiment, the channel listening module 102 is specifically configured for at least one of the following.

The listen-before-talk detection is performed on one carrier.

The listen-before-talk detection is performed on one resource pool.

The listen-before-talk detection is performed on one frequency domain resource subset in one resource pool, where each frequency domain resource subset includes at least one channel in the one resource pool.

In an embodiment, the channel listening module 102 is specifically configured for the following: when a detection result of the listen-before-talk detection is a consecutive listen-before-talk failure, a resource is reselected, where the reselected resource belongs to another frequency domain resource subset in a frequency domain, and the another frequency domain resource subset includes at least one channel in the one resource pool.

In an embodiment, the apparatus is further specifically configured for the first terminal to perform the listen-before-talk detection on the another frequency domain resource subset, where the detection result is that no consecutive listen-before-talk failure occurs.

In an embodiment, the frequency domain resource subset in the apparatus is indicated by higher-layer signaling.

In an embodiment, the information reporting module 103 is specifically configured for the following: target information is determined by the first terminal based on a listen-before-talk detection result of the listen-before-talk detection, and the target information is reported by the first terminal.

In an embodiment, the target information includes a second time-frequency resource set, and the second time-frequency resource set includes a time-frequency resource in a resource pool that does not overlap with a channel where a consecutive listen-before-talk failure occurs.

In an embodiment, the listen-before-talk detection result includes at least a consecutive listen-before-talk failure.

In an embodiment, the information reporting module 103 is specifically configured for the following: at least one time-frequency resource in a first time-frequency resource set is excluded by a physical layer of the first terminal, and a set corresponding to remaining time-frequency resources is marked as a second time-frequency resource set, where the first time-frequency resource set includes a time-frequency resource included in a channel where no consecutive listen-before-talk failure occurs included in one resource pool within one time interval.

The target information is reported to a higher layer by the physical layer of the first terminal, where the target information includes the second time-frequency resource set.

In an embodiment, determining the channel where no consecutive listen-before-talk failure occurs in the information reporting module 103 includes the following.

At least one channel where a consecutive listen-before-talk failure occurs notified by a medium access control layer is received by the physical layer of the first terminal.

In an embodiment, the apparatus is further specifically configured for at least one of the following.

A listen-before-talk failure indication reported by a physical layer of the first terminal is received by a higher layer of the first terminal, where the listen-before-talk failure indication includes a channel where a consecutive listen-before-talk failure occurs.

At least one time-frequency resource in a first time-frequency resource set is excluded by the physical layer of the first terminal, and a set corresponding to remaining time-frequency resources after is marked as a second time-frequency resource set, where the first time-frequency resource set includes at least one time-frequency resource included in one resource pool within one time interval.

The second time-frequency resource set is reported to the higher layer of the first terminal by the physical layer of the first terminal.

The second time-frequency resource set reported by the physical layer of the first terminal is received by the higher layer of the first terminal.

At least one time-frequency resource is selected in the second time-frequency resource set by the higher layer of the first terminal, where the at least one time-frequency resource does not overlap with a channel where a consecutive listen-before-talk failure occurs in a resource pool where the at least one time-frequency resource is located.

In an embodiment, FIG. 10 is a structural diagram of another sidelink listen-before-talk detection apparatus according to an embodiment of the present application. Referring to FIG. 10, an embodiment of the present application provides a sidelink listen-before-talk detection apparatus. The apparatus can perform the sidelink listen-before-talk detection method of any embodiment of the present application and has function modules and beneficial effects corresponding to the performed method. The apparatus may be implemented by software and/or hardware and is generally applied to a base station. The apparatus provided in the embodiment of the present application specifically includes a detection configuration module 201.

The detection configuration module 201 is configured for a base station to send higher-layer configuration information of listen-before-talk detection to a first terminal. The higher-layer configuration information includes at least time domain configuration information.

In some embodiments, the time domain configuration information includes at least one of bitmap configuration information at a time domain position of the listen-before-talk detection, a time domain period of the listen-before-talk detection, duration of the listen-before-talk detection within the time domain period, duration of the listen-before-talk detection, or duration and a proportion or a minimum proportion of the listen-before-talk detection within the duration.

FIG. 11 is a structural diagram of a terminal according to an embodiment of the present application. The terminal includes a processor 10, a memory 11, an input apparatus 12 and an output apparatus 13. One or more processors 10 may be included in the terminal. One processor 10 is shown as an example in FIG. 11. The processor 10, the memory 11, the input apparatus 12 and the output apparatus 13 in the terminal may be connected via a bus or in other manners. The connection via a bus is shown as an example in FIG. 11.

As a computer-readable storage medium, the memory 11 may be configured to store software programs, computer-executable programs and modules, such as a module (the access process performing module 101, the channel listening module 102 or the information reporting module 103) corresponding to the apparatus for determining a sidelink channel access manner in the embodiment of the present application. The processor 10 executes software programs, instructions and modules stored in the memory 11 to perform function applications and data processing of the terminal, that is, to perform the preceding method for determining a sidelink channel access manner.

The memory 11 may mainly include a program storage region and a data storage region. The program storage region may store an operating system and an application program required by at least one function. The data storage region may store data created according to the use of a user equipment. Additionally, the memory 11 may include a high-speed random-access memory and may also include a nonvolatile memory such as at least one disk memory, a flash memory, or another nonvolatile solid-state memory. In some examples, the memory 11 may further include memories located remotely relative to the processor 10, and these remote memories may be connected to the base station via a network. Examples of the network include, but are not limited to, the Internet, an intranet, a local area network, a mobile communication network, and a combination thereof.

The input device 12 may be configured to receive inputted digital or character information and generate key signal input related to the user setting and function control of the user equipment. The output apparatus 13 may include a display device such as a display screen.

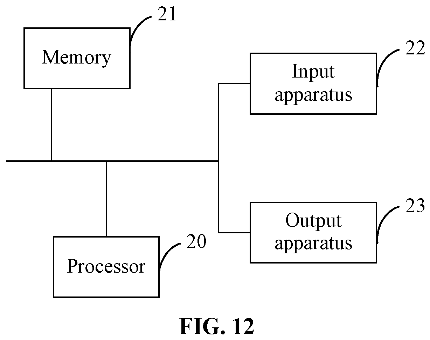

FIG. 12 is a structural diagram of a terminal according to an embodiment of the present application. The terminal includes a processor 20, a memory 21, an input apparatus 22 and an output apparatus 23. One or more processors 20 may be included in the terminal. One processor 20 is shown as an example in FIG. 12. The processor 20, the memory 21, the input apparatus 22 and the output apparatus 23 in the terminal may be connected via a bus or in other manners. The connection via a bus is shown as an example in FIG. 12.

As a computer-readable storage medium, the memory 21 may be configured to store software programs, computer-executable programs and modules, such as a module (the detection configuration module) corresponding to the apparatus for determining a sidelink channel access manner in the embodiment of the present application. The processor 20 executes software programs, instructions and modules stored in the memory 21 to perform function applications and data processing of the terminal, that is, to perform the preceding method for determining a sidelink channel access manner.

The memory 21 may mainly include a program storage region and a data storage region. The program storage region may store an operating system and an application program required by at least one function. The data storage region may store data created according to the use of a user equipment. Additionally, the memory 21 may include a high-speed random-access memory and may also include a nonvolatile memory such as at least one disk memory, a flash memory, or another nonvolatile solid-state memory. In some examples, the memory 21 may further include memories located remotely relative to the processor 20, and these remote memories may be connected to the base station via a network. Examples of the network include, but are not limited to, the Internet, an intranet, a local area network, a mobile communication network, and a combination thereof.

The input device 22 may be configured to receive inputted digital or character information and generate key signal input related to the user setting and function control of the user equipment. The output apparatus 23 may include a display device such as a display screen.

An embodiment of the present application further provides a storage medium including computer-executable instructions which, when executed by a computer processor, are configured to perform a method for determining a sidelink channel access manner. The method includes the following.

A channel access process is performed by a first terminal.

Listen-before-talk detection is performed by the first terminal.

Feedback information related to the listen-before-talk detection is reported by the first terminal.

Alternatively, when executed by a computer processor, the computer-executable instructions cause the processor to perform a method for determining a sidelink channel access manner. The method includes the following.

Higher-layer configuration information for listen-before-talk detection is sent to a first terminal by a base station. The higher-layer configuration information includes at least time domain configuration information.

From the preceding description of embodiments, it is apparent to those skilled in the art that the present application may be implemented by use of software and necessary general-purpose hardware, or may be certainly implemented by hardware, but the former is a preferred implementation in many cases. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disk of a computer and includes multiple instructions for causing a computer device (which may be a personal computer, a server, or a network device) to perform the method in any embodiment of the present application.

It is to be noted that units and modules included in the preceding embodiment of the apparatus are divided according to functional logic, and the division is not limited to this as long as the corresponding functions can be implemented. Additionally, the specific names of function units are used for distinguishing between each other and are not to limit the scope of the present application.

It is to be understood by those of ordinary skill in the art that some or all steps of the preceding disclosed method and function modules/units in the preceding system or device may be implemented as software, firmware, hardware and suitable combinations thereof.

In the hardware implementation, the division of the function modules/units in the preceding description may not correspond to the division of physical components. For example, one physical component may have multiple functions, or one function or step may be performed cooperatively by multiple physical components. Some or all physical components may be implemented as software executed by a processor such as a central processing unit, a digital signal processor, or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage media include, but are not limited to, a RAM, a ROM, an electrically erasable programmable read-only memory (EEPROM), a flash memory, or other memory technologies, a compact disc read-only memory (CD-ROM), a digital video disk (DVD) or other optical disc memories, magnetic cassettes, magnetic tapes, magnetic disk memories or other magnetic storage apparatuses, or any other medium used for storing the desired information and accessible by a computer. Additionally, as is known to those having ordinary skill in the art, the communication media generally include computer-readable instructions, data structures, program modules, or other data in carriers or in modulated data signals transported in other transport mechanisms and may include any information delivery medium.

## Claims

1. A sidelink listen-before-talk detection method, comprising:
performing, by a first terminal, a channel access process;
performing, by the first terminal, listen-before-talk detection; and
reporting, by the first terminal, feedback information related to the listen-before-talk detection.

2. The method according to claim 1, wherein the feedback information comprises at least one of a listen-before-talk detection result or target information determined based on a listen-before-talk detection result.

3. The method according to claim 2, wherein reporting, by the first terminal, the listen-before-talk detection result of the listen-before-talk detection comprises at least one of the following:
reporting, by a physical layer of the first terminal, listen-before-talk consecutive failure recovery to a higher layer of the first terminal;
reporting, by a media access control layer of the first terminal, listen-before-talk consecutive failure recovery to a higher layer of the first terminal;
reporting, by the first terminal, listen-before-talk consecutive failure recovery to a base station;
reporting, by the first terminal, listen-before-talk consecutive failure recovery to a second terminal;
reporting, by a physical layer of the first terminal, listen-before-talk consecutive failure cancellation to a higher layer of the first terminal;
reporting, by a media access control layer of the first terminal, listen-before-talk consecutive failure cancellation to a higher layer of the first terminal;
reporting, by the first terminal, listen-before-talk consecutive failure cancellation to a base station;
reporting, by the first terminal, listen-before-talk consecutive failure cancellation to a second terminal;
reporting, by a physical layer of the first terminal, a listen-before-talk failure to a higher layer of the first terminal; or
reporting, by a media access control layer of the first terminal, at least one channel where a consecutive listen-before-talk failure occurs to a physical layer of the first terminal.

4. The method according to claim 1, further comprising: receiving, by the first terminal, higher layer information, wherein the higher layer information comprises time domain configuration information of the listen-before-talk detection, and the time domain configuration information of the listen-before-talk detection comprises at least one of:
bitmap configuration information at a time domain position of the listen-before-talk detection;
a time domain period of the listen-before-talk detection;
duration of the listen-before-talk detection within the time domain period;
duration of the listen-before-talk detection; or
duration and a proportion or a minimum proportion of the listen-before-talk detection within the duration.

5. The method according to claim 2, wherein reporting, by the first terminal, the listen-before-talk detection result of the listen-before-talk detection comprises:
performing, by a physical layer of the first terminal, the listen-before-talk detection;
counting, by the physical layer of the first terminal, a number of times that the listen-before-talk detection result is a listen-before-talk failure; and
when the count is zero or reaches a threshold value, reporting, by the physical layer of the first terminal, a consecutive listen-before-talk failure to a media access control layer of the first terminal.

6. The method according to claim 1, further comprising at least one of the following:
when the first terminal detects a listen-before-talk consecutive failure for one carrier, reselecting resource pools, wherein each carrier comprises at least two of the resource pools; or
when the first terminal detects a listen-before-talk consecutive failure for one carrier, reselecting the carrier, wherein the reselected carrier is different from the carrier, and each carrier comprises at least one resource pool.

7. The method according to claim 1, wherein performing, by the first terminal, the listen-before-talk detection comprises at least one of the following:
performing the listen-before-talk detection on one carrier;
performing the listen-before-talk detection on one resource pool; or
performing the listen-before-talk detection on one frequency domain resource subset in one resource pool, wherein each frequency domain resource subset comprises at least one channel in the one resource pool.

8. The method according to claim 7, wherein after performing the listen-before-talk detection on the one frequency domain resource subset in the one resource pool, the method further comprises:
when a detection result of the listen-before-talk detection is a consecutive listen-before-talk failure, reselecting a resource, wherein the reselected resource belongs to another frequency domain resource subset in a frequency domain, and the another frequency domain resource subset comprises at least one channel in the one resource pool.

9. The method according to claim 8, further comprising:
performing, by the first terminal, the listen-before-talk detection on the another frequency domain resource subset, wherein the detection result is that no consecutive listen-before-talk failure occurs.

10. The method according to claim 7, wherein the frequency domain resource subset is indicated by higher-layer signaling.

11. The method according to claim 1, wherein reporting, by the first terminal, the feedback information related to the listen-before-talk detection comprises:
determining, by the first terminal, target information based on a listen-before-talk detection result of the listen-before-talk detection; and
reporting, by the first terminal, the target information.

12. The method according to claim 2, wherein the target information comprises a second time-frequency resource set, and the second time-frequency resource set comprises a time-frequency resource in a resource pool that does not overlap with a channel where a consecutive listen-before-talk failure occurs.

13. The method according to claim 2, wherein the listen-before-talk detection result comprises at least a consecutive listen-before-talk failure.

14. The method according to claim 11, wherein reporting, by the first terminal, the target information comprises:
excluding, by a physical layer of the first terminal, at least one time-frequency resource in a first time-frequency resource set, and marking a set corresponding to remaining time-frequency resources as a second time-frequency resource set, wherein the first time-frequency resource set comprises a time-frequency resource comprised in a channel where no consecutive listen-before-talk failure occurs comprised in one resource pool within one time interval; and
reporting, by the physical layer of the first terminal, the target information to a higher layer, wherein the target information comprises the second time-frequency resource set.

15. The method according to claim 14, wherein determining the channel where no consecutive listen-before-talk failure occurs comprises:
receiving, by the physical layer of the first terminal, at least one channel where a consecutive listen-before-talk failure occurs notified by a medium access control layer.

16. The method according to claim 1, further comprising:
receiving, by a higher layer of the first terminal, a listen-before-talk failure indication reported by a physical layer of the first terminal, wherein the listen-before-talk failure indication comprises a channel where a consecutive listen-before-talk failure occurs;
excluding, by the physical layer of the first terminal, at least one time-frequency resource in a first time-frequency resource set, and marking a set corresponding to remaining time-frequency resources as a second time-frequency resource set, wherein the first time-frequency resource set comprises at least one time-frequency resource comprised in one resource pool within one time interval;
reporting, by the physical layer of the first terminal, the second time-frequency resource set to the higher layer of the first terminal;
receiving, by the higher layer of the first terminal, the second time-frequency resource set reported by the physical layer of the first terminal; and
selecting, by the higher layer of the first terminal, at least one time-frequency resource in the second time-frequency resource set, wherein the at least one time-frequency resource does not overlap with a channel where a consecutive listen-before-talk failure occurs in a resource pool where the at least one time-frequency resource is located.

17. A sidelink listen-before-talk detection method, comprising:
sending, by a base station, higher-layer configuration information of listen-before-talk detection to a first terminal;
wherein the higher-layer configuration information comprises at least time domain configuration information.

18. The method according to claim 17, wherein the time domain configuration information comprises at least one of:
bitmap configuration information at a time domain position of the listen-before-talk detection;
a time domain period of the listen-before-talk detection;
duration of the listen-before-talk detection within the time domain period;
duration of the listen-before-talk detection; or
duration and a proportion or a minimum proportion of the listen-before-talk detection within the duration.

19. A terminal, comprising:
at least one processor; and
a memory configured to store at least one program;
wherein when the at least one program is executed by the at least one processor, the at least one processor performs the method according to any one of claims 1 to 16.

20. A base station, comprising:
at least one processor; and
a memory configured to store at least one program;
wherein when the at least one program is executed by the at least one processor, the at least one processor performs the method according to any one of claims 17 and 18.

21. A computer-readable storage medium storing at least one program which, when executed by at least one processor, causes the at least one processor to perform the method according to any one of claims 1 to 18.
